# EUROPÄISCHE PATENTSCHRIFT

(11) **EP 1 234 107 B1**
(45) Veröffentlichungstag und Bekanntmachung des Hinweises auf die Patenterteilung: **17.05.2006**
(21) Anmeldenummer: 00987194.8
(22) Anmeldetag: 30.11.2000
(51) Int. Cl.: F02D 11/10, F02P 5/15

(54) **VERFAHREN ZUM DÄMPFEN VON MECHANISCHEN SCHWINGUNGEN IM ANTRIEBSSTRANG EINER BRENNKRAFTMASCHINE**
METHOD FOR DAMPING MECHANICAL VIBRATIONS IN THE DRIVE TRAIN OF AN INTERNAL COMBUSTION ENGINE
PROCEDE D'ATTENUATION D'OSCILLATIONS MECANIQUES DANS LA CHAINE CINEMATIQUE D'UN MOTEUR A COMBUSTION INTERNE

(30) Priorität: 03.12.1999 DE 19958251
(43) Veröffentlichungstag der Anmeldung: 28.08.2002
(73) Patentinhaber: SIEMENS AKTIENGESELLSCHAFT, 80333 München (DE)
(72) Erfinder: MADER, Ralph, 93077 Bad Abbach (DE); SÜDHOLT, Michael, 84085 Langquaid (DE)
(86) Internationale Anmeldenummer: PCT/DE2000/004266
(87) Internationale Veröffentlichungsnummer: WO 2001/040639

(56) Entgegenhaltungen:
- DE-A- 19 814 743
- DE-C- 4 201 861
- DE-C- 19 819 050
- FR-A- 2 766 872
- US-A- 4 527 523
- US-A- 5 452 698

## Beschreibung

Die Erfindung betrifft ein Verfahren zum Dämpfen von mechanischen Schwingungen im Antriebsstrang einer Brennkraftmaschine gemäß dem Oberbegriff des Anspruchs 1.

Der Antriebsstrang eines Kraftfahrzeugs zwischen der Brennkraftmaschine und den Antriebsrädern weist zwangsläufig eine bestimmte Elastizität auf, so daß bei einem Lastwechsel unerwünschte Schwingungen im Antriebsstrang auftreten. Es ist bekannt, derartige Schwingungen im Antriebsstrang zu dämpfen, indem der Zündwinkel der Brennkraftmaschine nach Ablauf einer vorgegebenen Totzeit nach einem Lastwechsel für eine vorgegebene Wirkdauer um einen bestimmten Winkel zurückgenommen wird. Nach Ablauf der vorgegebenen Wirkdauer wird der Zündwinkel dann wieder auf den ursprünglichen Wert zurückgefahren. Diese Art der Zündwinkelsteuerung beeinflußt vorteilhaft das Antriebsmoment der Brennkraftmaschine und dämpft so die durch den Lastwechsel angeregten Schwingungen im Antriebsstrang.

Nachteilig an dem vorstehend beschriebenen bekannten Verfahren zur Dämpfung der durch einen Lastwechsel im Antriebsstrang einer Brennkraftmaschine angeregten mechanischen Schwingungen ist jedoch die Tatsache, daß Fertigungstoleranzen, Alterungseffekte der Motoraufhängung sowie die aktuelle Getriebeübersetzung während des Lastwechsels unberücksichtigt bleiben. So wird die Aufhängung der Brennkraftmaschine im Laufe der Zeit aufgrund von Alterungseffekten weicher, wodurch die Schwingungsneigung des Antriebsstrangs zunimmt.

Weiterhin wirken sich Lastwechsel bei Getriebemotoren in niedrigen Gängen stärker aus als in hohen Gängen.

Aus DE 42 32 204 A1, DE 42 22 298 A1, DE 40 13 943 C2, DE 40 09 792 A1 und US 5,452,698 sind ebenfalls Verfahren zum Dämpfen von mechanischen Schwingungen im Antriebsstrang einer Brennkraftmaschine bekannt, bei denen die Zündwinkelverstellung flexibel in Abhängigkeit vom Betriebszustand der Brennkraftmaschine bzw. in Abhängigkeit von der Stärke der Schwingung erfolgt.

Nachteilig an diesen bekannten Verfahren ist jedoch die Tatsache, daß die Schwingungsunterdrückung erst dann einsetzt, wenn bereits eine Schwingung im Antriebsstrang entstanden ist, da zur Ermittlung einer Schwingung im Antriebsstrang die Drehzahl der Kurbelwelle ausgewertet wird. Demzufolge ermöglichen diese Verfahren lediglich eine Dämpfung bereits entstandener Schwingungen im Antriebsstrang, wohingegen es nicht oder nur unbefriedigend möglich ist, die Entstehung einer Schwingung im Antriebsstrang zu vermeiden.

Weiterhin ist aus DE 39 30 487 A1 ein Verfahren zum Dämpfen von mechanischen Schwingungen im Antriebsstrang einer Brennkraftmaschine bekannt, bei dem die Kraftstoffeinspritz-Impulsbreite erfaßt wird, so daß ein Beschleunigungsvorgang bereits vor dem Auftreten von mechanischen Schwingungen im Antriebsstrang erkannt werden kann. Das aus dieser Druckschrift bekannte Dämpfungsverfahren setzt nur ein, wenn die Messung der Kraftstoffeinspritz-Impulsbreite einen bevorstehenden Beschleunigungsvorgang ankündigt, wobei die zündwinkelverstellung jedoch unabhängig von der Kraftstoffeinspritz-Impulsbreite erfolgt und in Abhängigkeit von anderen Größen festgelegt. wird.

Nachteilig an diesem bekannten Verfahren ist also ebenfalls, daß die eigentliche Zündwinkelverstellung und damit die Dämpfungswirkung unabhängig von der Einspritzmenge ist, so daß keine flexible quantitative Anpassung der Dämpfungswirkung an die Einspritzmenge vorliegt.

Schließlich ist aus DE 37 17 368 C2 ein Verfahren zum Dämpfen von mechanischen Schwingungen im Antriebsstrang einer Brennkraftmaschine bekannt, bei dem die Drosselklappenstellung erfaßt wird, um rechtzeitig einen bevorstehenden Beschleunigungsvorgang erkennen zu können. Bei einer Beschleunigung wird dann der Zündwinkel fexibel verstellt, wobei die Dauer der Zündwinkelverstellung von der Änderung der Drosselklappenstellung und damit von der Intensität des bevorstehenden Beschleunigungsvorgangs abhängt.

Nachteilig an diesem bekannten Verfahren ist jedoch die Tatsache, daß lediglich die Dauer der Zündwinkelverstellung von der Drosselklappenstellung abhängt, so daß nur eine unbefriedigende Anpassung der Schwingungsdämpfung an die Intensität des bevorstehenden Beschleunigungsvorgangs vorliegt.

Der Erfindung liegt also die Aufgabe zugrunde, das vorstehend beschriebene bekannte Verfahren zum Dämpfen von mechanischen Schwingungen im Antriebsstrang einer Brennkraftmaschine dahingehend zu verbessern, daß eine möglichst optimale Anpassung der Schwingungsdämpfung an die Intensität des bevorstehenden Beschleunigungsvorgangs gegeben ist.

Die Erfindung wird, ausgehend von dem vorstehend beschriebenen bekannten Verfahren gemäß dem Oberbegriff des Anspruchs 1, durch die kennzeichnenden Merkmale des Anspruchs 1 gelöst.

Die Erfindung umfaßt die allgemeine technische Lehre, die Zündwinkelrücknahme bei einem Lastwechsel nicht starr, sondern flexibel in Abhängigkeit von den jeweiligen Randbedingungen zu steuern.

Hierbei wird die auf den Antriebsstrang der Brennkraftmaschine wirkende Schwingungsanregung erfaßt und die Rücknahme des Zündwinkels bei einem Lastwechsel in Abhängigkeit von der Schwingungsanregung flexibel gesteuert.

Die Schwingungsanregung wird dadurch erfaßt, daß der Stellwinkel der Drosselklappe der Brennkraftmaschine gemessen wird. Bei einem plötzlichen Öffnen der Drosselklappe und einer demzufolge zu erwartenden plötzlichen Zunahme des Antriebsmoments der Brennkraftmaschine kann die Zündwinkelverstellung bereits frühzeitig gegensteuern, um die Ausbildung von Schwingungen im Antriebsstrang zu vermeiden.

Darüber hinaus besteht auch die Möglichkeit, eine Schwingungsanregung im Antriebsstrang dadurch zu erfassen, daß der Betriebszustand der Brennkraftmaschine ermittelt wird. So kann beispielsweise die Drehzahl der Brennkraftmaschine gemessen werden, um daraus die zeitliche Änderung der Drehzahl zu berechnen und bei einer plötzlichen Drehzahländerung auf einen Lastwechsel schließen zu können.

Neben einer flexiblen Erkennung eines Lastwechsels im Antriebsstrang erfolgt auch die Reaktion auf den Lastwechsel flexibel. So ist vorgesehen, die Stärke der Zündwinkelrücknahme an die Stärke des Lastwechsels anzupassen. Dies bietet zum einen den Vorteil, daß Alterungseffekte beispielsweise an der Aufhängung der Brennkraftmaschine kompensiert werden. Zum anderen wird auf diese Weise auch der Betriebszustand der Brennkraftmaschine bzw. des gesamten Systems aus Brennkraftmaschine, Antriebsstrang und Getriebe berücksichtigt.

In einer Variante der Erfindung wird vor der Reaktion auf einen Lastwechsel zunächst der Betriebszustand der Brennkraftmaschine ermittelt, indem beispielsweise die Drehzahl, die Drehzahländerung, der Luftmassenstrom, die Ansauglufttemperatur, die Kühlmitteltemperatur, die Fahrzeuggeschwindigkeit und/oder das Übersetzungsverhältnis des Getriebes gemessen wird, um den Zündwinkel der Brennkraftmaschine Zusätzlich in Abhängigkeit von einer oder mehrerer dieser Größen flexibel zu verstellen.

Im Rahmen der vorstehend beschriebenen flexiblen Zündwinkelverstellung in Abhängigkeit von dem Lastwechsel bzw. von dem Betriebszustand der Brennkraftmaschine können verschiedene Zündwinkelparameter verändert werden. Eine Möglichkeit hierzu besteht darin, die Totzeit zwischen dem Auftreten eines Lastwechsels und der Änderung des Zündwinkels in Abhängigkeit von den gemessenen Werten zu variieren. Eine andere Möglichkeit gemäß der Erfindung sieht vor, die Größe der Zündwinkelverstellung entsprechend zu variieren. Darüber hinaus besteht auch die Möglichkeit, die Dauer der Zündwinkelverstellung entsprechend den gemessenen Werten anzupassen, um eine optimale Dämpfung der durch einen Lastwechsel angeregten Schwingungen im Antriebsstrang zu erreichen. Schließlich kann auch noch die Art der Rückführung des Zündwinkels auf den ursprünglichen Wert gesteuert werden, um eine optimale Dämpfung im Antriebsstrang zu bewirken.

Andere vorteilhafte Weiterbildungen der Erfindung sind in den Unteransprüchen gekennzeichnet bzw. nachstehend zusammen mit der Beschreibung des bevorzugten Ausführungsbeispiels der Erfindung anhand der Figuren näher dargestellt. Es zeigen:
- Figur 1: das erfindungsgemäße Verfahren in Form eines Flußdiagramms,
- Figur 2: den Verlauf des Zündwinkels nach einem Lastwechsel sowie
- Figur 3: einen alternativen Verlauf des Zündwinkels nach einem Lastwechsel.

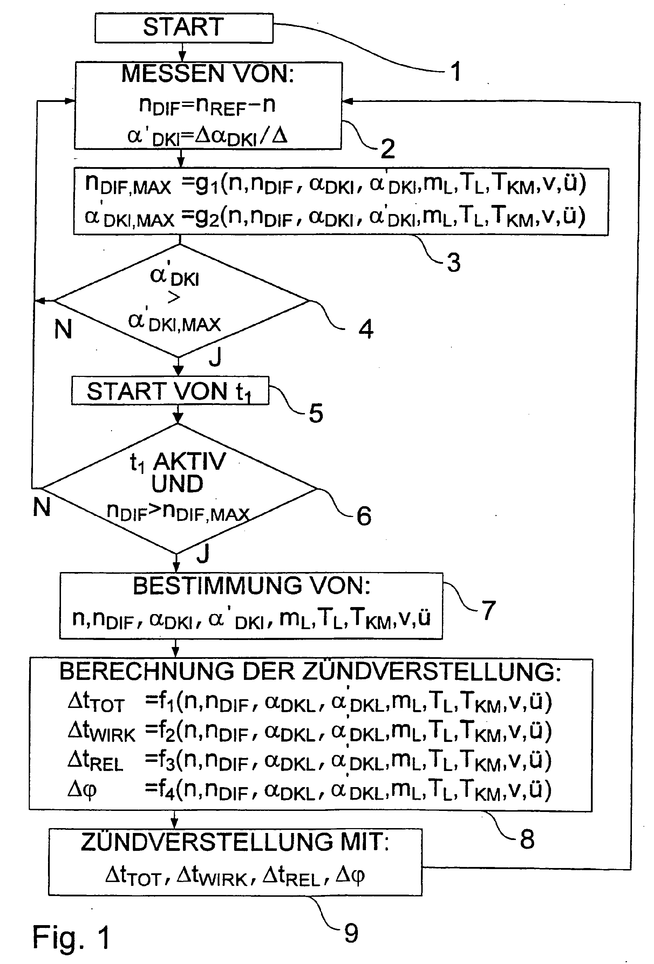

Bei dem in Figur 1 dargestellten erfindungsgemäßen Verfahren zur Dämpfung von Schwingungen im Antriebsstrang einer Brennkraftmaschine wird nach einem Startschritt 1 zunächst in einem Schritt 2 die zeitliche Änderung n_{dif} der Drehzahl des Antriebsstrangs sowie die zeitliche Änderung α'_{DK1} des Drosselklappenwinkels ermittelt, um einen Lastsprung im Antriebsstrang erkennen zu können.

Anschließend werden in einem weiteren Schritt 3 Schwellenwerte n_{dif,max} und α'_{DK1,max} für die Drehzahländerung und für die Änderung der Drosselklappenstellung in Abhängigkeit vom Betriebszustand der Brennkraftmaschine aus einem mehrdimensionalen Kennlinienfeld ausgelesen. Die Bestimmung der Schwellenwerte ist hierbei von der Drehzahl n, der Änderung n_{dif} der Drehzahl, der Drosselklappenstellung α_{DK1}, der Änderung α'_{DK1} der Drosselklappenstellung, der Luftmasse m_{L}, der Lufttemperatur T_{L}, der Kühlmitteltemperatur T_{KM}, der Fahrzeuggeschwindigkeit v und dem Übersetzungsverhältnis abhängig.

Im nächsten Schritt 4 wird überprüft, ob der Fahrer des durch die Brennkraftmaschine angetriebenen Kraftfahrzeugs plötzlich das Fahrpedal betätigt hat, was zu einer Öffnung der Drosselklappe führt. Hierzu wird die gemessene Änderung α'_{DK1} der Drosselklappenstellung mit dem Schwellenwert α'_{DK1,max} verglichen. Beim Unterschreiten des Schwellenwerts α'_{DK1,max} liegt offensichtlich kein derartiger Lastwechsel vor, so daß wieder zu Schritt 2 zurückgegangen wird. Ein Überschreiten des Schwellenwerts α'_{DK1,max} zeigt dagegen, daß der Fahrer des Kraftfahrzeugs plötzlich Gas gegeben hat, so daß ein Anstieg des Antriebsmoments der Brennkraftmaschine zu erwarten ist.

Beim Überschreiten des vorgegebenen Schwellenwerts wird deshalb zu Schritt 5 übergegangen wird, in dem eine Zeitspanne t₁ gestartet wird.

Während der Zeitspanne t₁ wird dann in einem nächsten Schritt 6 laufend die gemessene Drehzahländerung n_{dif} mit dem zuvor berechneten Schwellenwert n_{dif,max} verglichen, um zu überprüfen, ob der plötzliche Anstieg des Antriebsmoments der Brennkraftmaschine auch zu einem Lastwechsel führt, was sich in einem entsprechenden Anstieg der Drehzahl äußert. Beim Unterschreiten des vorgegebenen Schwellenwerts n_{dif,max} wird angenommen, daß die Zunahme des Antriebsmoments nicht zu einem Lastwechsel führt, so daß zu Schritt 2 zurückgegangen wird.

Andernfalls wird in Schritt 7 der Betriebszustand der Brennkraftmaschine ermittelt, indem die Drehzahl n, die Änderung n_{dif} der Drehzahl, die Drosselklappenstellung α_{DK1}, die Änderung α'_{DK1} der Drosselklappenstellung, die Luftmasse rn_{L}, die Lufttemperatur T_{L}, die Kühlmitteltemperatur T_{KM,} die Fahrzeuggeschwindigkeit v und das Übersetzungsverhältnis gemessen wird.

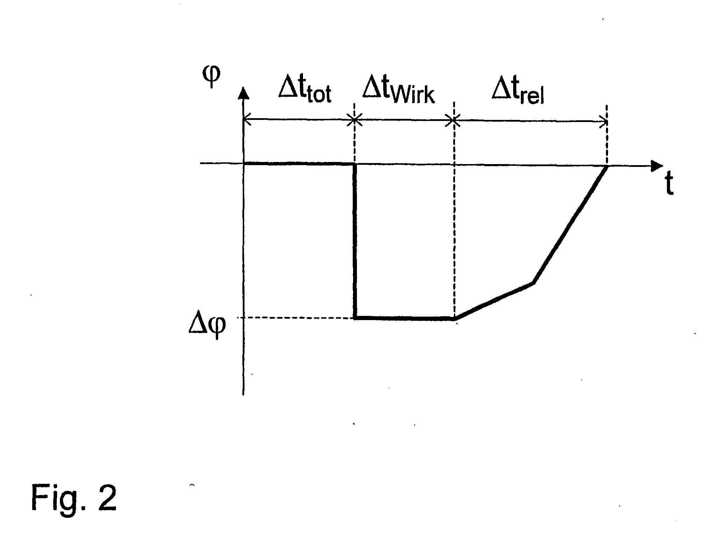

Anschließend werden in einem nächsten Schritt 8 die Parameter Δtₜₒₜ, Δt_{WIRK}, Δt_{REL} und Δϕ der Zündwinkelverstellung berechnet, deren physikalische Bedeutung aus dem in Figur 2 dargestellten Verlauf des Zündwinkels nach einem Lastwechsel verdeutlicht wird. Die Berechnung der einzelnen Steuerungsparameter für die Zündwinkelsteuerung erfolgt hierbei jeweils in Abhängigkeit vom Betriebszustand der Brennkraftmaschine, indem der Parameterwert aus einem mehrdimensionalen Kennlinienfeld ausgelesen wird.

Ein Parameter für die Zündwinkelverstellung ist hierbei die Totzeit Δtₜₒₜ, die nach einem festgestellten Lastwechsel zunächst abgewartet wird, bis der Zündwinkel zurückgenommen wird. Ein weiterer Parameter ist der Winkel Δϕ, um den der Zündwinkel nach Ablauf der Totzeit Δtₜₒₜ zurückgenommen wird. Darüber hinaus wird im Rahmen des erfindungsgemäßen Verfahrens in dieser Variante auch die Wirkdauer Δt_{WIRK} gesteuert, die den Zeitraum angibt, für den der Zündwinkel zurückgenommen wird. Schließlich wird auch noch die Rückführzeit Δtᵣₑₗ gesteuert, die angibt, innerhalb welcher Zeit nach Ablauf der Wirkdauer Δt_{wirk} der Zündwinkel wieder auf den normalen Wert zurückgeführt wird. In dem dargestellten Beispiel erfolgt die Rückführung des Zündwinkels auf den ursprünglichen Wert in zwei Zeitabschnitten, innerhalb derer sich der Zündwinkel jeweils linear zur Zeit verhält.

Nach der Bestimmung der Parameter für die Zündwinkelverstellung erfolgt dann in Schritt 9 die eigentliche Zündwinkelverstellung, um die durch den Lastwechsel angeregte Schwingung im Antriebsstrang zu dämpfen.

Anschließend wird dann wieder zu Schritt 2 zurückgegangen, um den nächsten Lastwechsel erkennen zu können.

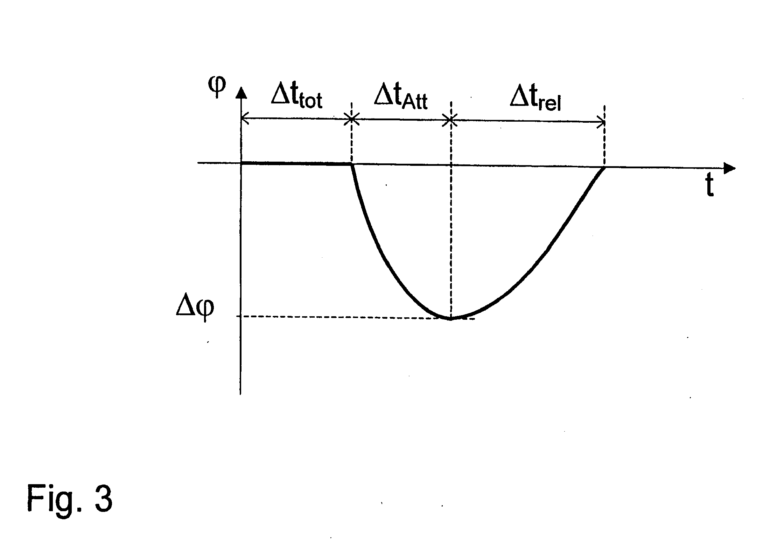

Figur 3 zeigt einen alternativen Verlauf des Zündwinkels nach einem Lastwechsel, bei dem der Zündwinkelverlauf optimal an den Lastwechsel angepaßt ist und sich deshalb nicht linear zur Zeit verhält.

Die Erfindung beschränkt sich in ihrer Ausführung nicht auf die vorstehend angegebenen bevorzugten Ausführungsbeispiele. Vielmehr ist eine Anzahl von Varianten denkbar, welche von der nach Anspruch 1 dargestellten Lösung auch bei grundsätzlich anders gearteten Ausführungen Gebrauch macht.

## Patentansprüche

1. Verfahren zum Dämpfen von mechanischen Schwingungen im Antriebsstrang einer Brennkraftmaschine mit den folgenden Schritten:
- Erfassung von Schwingungsanregungen im Antriebsstrang,
- Verstellung des Zündwinkels der Brennkraftmaschine beim Auftreten einer Schwingungsanregung im Antriebsstrang, um die Schwingung im Antriebsstrang zu dämpfen,
wobei die Verstellung des Zündwinkels in Abhängigkeit von der Schwingungsanregung flexibel erfolgt und zur Erfassung der Schwingungsanregungen im Antriebsstrang die Drosselklappenstellung oder die Änderung der Drosselklappenstellung der Brennkraftmaschine erfaßt wird,
**dadurch gekennzeichnet,**
**daß** die Größe der Zündwinkelverstellung in Abhängigkeit von der Drosselklappenstellung oder der Änderung der Drosselklappenstellung variiert wird.

2. Verfahren nach Anspruch 1, **dadurch gekennzeichnet,**
**daß** zur Ermittlung des Betriebszustands der Brennkraftmaschine zusätzlich die Drehzahl, die Drehzahländerung, die Drehzahldifferenz, die normierte Füllung, die Änderung der normierten Füllung, der Luftmassenstrom, die Ansauglufttemperatur, die Kühlmitteltemperatur, die Fahrzeuggeschwindigkeit und/oder das Übersetzungsverhältnis erfaßt wird, um den Zündwinkel zusätzlich in Abhängigkeit von einer oder mehrerer dieser Größen flexibel zu verstellen.

3. Verfahren nach einem der vorhergehenden Ansprüche, **dadurch gekennzeichnet,**
**daß** der Zündwinkel der Brennkraftmaschine erst nach Ablauf einer Totzeit nach der Erfassung einer Schwingungsanregung verstellt wird, wobei die Totzeit in Abhängigkeit von der Schwingungsanregung und/oder dem Betriebszustand der Brennkraftmaschine flexibel festgelegt wird.

4. Verfahren.nach einem der vorhergehenden Ansprüche, **dadurch gekennzeichnet,**
**daß** der Zündwinkel nach der Erfassung einer Schwingungsanregung um einen vorgegebenen Korrekturwinkel verstellt wird,
wobei der Korrekturwinkel in Abhängigkeit von der Schwingungsanregung und/oder dem Betriebszustand der Brennkraftmaschine flexibel festgelegt wird.

5. Verfahren nach einem der vorhergehenden Ansprüche, **dadurch gekennzeichnet,**
**daß** der Zündwinkel nach der Erfassung einer Schwingungsanregung nur für eine vorgegebene Einwirkdauer verstellt wird,
wobei die Einwirkdauer in Abhängigkeit von der Schwingungsanregung und/oder dem Betriebszustand der Brennkraftmaschine flexibel festgelegt wird.

6. Verfahren nach Anspruch 5, **dadurch gekennzeichnet,**
**daß** die Rückstellung des Zündwinkels nach Ablauf der Einwirkdauer in Abhängigkeit von der Schwingungsanregung und/oder dem Betriebszustand der Brennkraftmaschine flexibel erfolgt.

7. Verfahren nach Anspruch 5 oder 6, **dadurch gekennzeichnet, daß** der Zündwinkel nach Ablauf der Einwirkdauer abschnittsweise linear über der Zeit zurückgestellt wird.

8. Verfahren nach Anspruch 7, **dadurch gekennzeichnet,**
**daß** der Zündwinkel nach Ablauf der Einwirkdauer in einem ersten Zeitabschnitt mit einem ersten Gradienten und in einem anschließenden zweiten Zeitabschnitt mit einem zweiten Gradienten zurückgestellt wird, wobei der Gradient in dem zweiten Abschnitt größer als in dem ersten Abschnitt ist.

9. Verfahren nach einem der vorhergehenden Ansprüche, **dadurch gekennzeichnet,**
**daß** der Zündwinkel nur verstellt wird, wenn die Brennkraftmaschine im Teillastbereich arbeitet.

10. Verfahren nach einem der Ansprüche 1 bis 9, **dadurch gekennzeichnet,**
**daß** der Zündwinkel nur verstellt wird, wenn die Brennkraftmaschine im Schubbetrieb arbeitet.

## Claims

1. Method for the damping of mechanical vibrations in the drive train of an internal combustion engine, having the following steps:
- detection of vibration excitations in the drive train,
- adjustment of the ignition angle of the internal combustion engine in the event of the occurrence of a vibration excitation in the drive train, in order to damp the vibration in the drive train,
the adjustment of the ignition angle taking place in a flexible way as a function of the vibration excitation, and, to detect the vibration excitations in the drive train, the throttle valve position or the change in the throttle valve position of the internal combustion engine being detected,
**characterized**
**in that** the size of the ignition angle adjustment is varied as a function of the throttle valve position or of the change in the throttle valve position.

2. Method according to Claim 1, **characterized in that**, to determine the operating state of the internal combustion engine, the rotational speed, the rotational speed change, the rotational speed difference, the standardized charge, the change in the standardized charge, the mass air flow, the intake air temperature, the coolant temperature, the vehicle speed and/or the transmission ratio are detected, in order to adjust the ignition angle in a flexible way additionally as a function of one or more of these variables.

3. Method according to one of the preceding claims, **characterized in that** the ignition angle of the internal combustion engine is adjusted only after an idle time after the detection of a vibration excitation has elapsed, the idle time being defined in a flexible way as a function of the vibration excitation and/or of the operating state of the internal combustion engine.

4. Method according to one of the preceding claims, **characterized in that**, after the detection of a vibration excitation, the ignition angle is adjusted by a predetermined correction angle, the correction angle being defined in a flexible way as a function of the vibration excitation and/or of the operating state of the internal combustion engine.

5. Method according to one of the preceding claims, **characterized in that**, after the detection of a vibration excitation, the ignition angle is adjusted only for a predetermined effective duration, the effective duration being defined in a flexible way as a function of the vibration excitation and/or of the operating state of the internal combustion engine.

6. Method according to Claim 5, **characterized in that** the resetting of the ignition angle after the effective duration has elapsed takes place in a flexible way as a function of the vibration excitation and/or of the operating state of the internal combustion engine.

7. Method according to Claim 5 or 6, **characterized in that**, after the effective duration has elapsed, the ignition angle is reset in segments linearly over time.

8. Method according to Claim 7, **characterized in that**, after the effective duration has elapsed, the ignition angle is reset in a first time segment with a first gradient and in a subsequent second time segment with a second gradient, the gradient being greater in the second segment than in the first segment.

9. Method according to one of the preceding claims, **characterized in that** the ignition angle is adjusted only when the internal combustion engine is operating in the part-load range.

10. Method according to one of Claims 1 to 9, **characterized in that** the ignition angle is adjusted only when the internal combustion engine is operating in the overrun mode.

## Revendications

1. Procédé permettant d'amortir des vibrations mécaniques dans la chaîne cinématique d'un moteur à combustion interne, lequel comprend les étapes suivantes :
- la saisie des excitations de vibrations dans la chaîne cinématique,
- la modification de l'angle d'allumage du moteur à combustion interne lors de l'apparition d'une excitation de vibrations dans la chaîne cinématique afin d'amortir la vibration dans ladite chaîne cinématique,
dans lequel, la modification de l'angle d'allumage s'effectue de manière flexible en fonction de l'excitation de vibrations et la position du papillon des gaz ou le changement de la position du papillon des gaz du moteur à combustion interne est (sont) saisi(e) en vue de saisir les excitations de vibrations dans la chaîne cinématique,
**caractérisé en ce que**
la grandeur de la modification de l'angle d'allumage est variée en fonction de la position du papillon des gaz ou du changement de la position du papillon des gaz.

2. Dispositif selon la revendication 1, **caractérisé en ce que**,
en vue de déterminer le régime du moteur à combustion interne, sont saisis en outre le nombre de tours, la variation du nombre de tours, la différence du nombre de tours, le remplissage normé, le changement du remplissage normé, le flux massique d'air, la température de l'air aspiré, la température du liquide de refroidissement, la vitesse du véhicule automobile et/ou le rapport de changement de vitesse, et ce afin de modifier de manière flexible l'angle d'allumage également en fonction d'une ou de plusieurs de ces grandeurs.

3. Procédé selon l'une des revendications précédentes, **caractérisé en ce que**
l'angle d'allumage du moteur à combustion interne n'est modifié qu'après qu'un temps mort se soit écoulé après la saisie d'une excitation de vibrations, le temps mort étant déterminé de manière flexible en fonction de l'excitation de vibrations et/ou du régime du moteur à combustion interne.

4. Procédé selon l'une des revendications précédentes, **caractérisé en ce que**
l'angle d'allumage après la saisie d'une excitation de vibrations est modifié selon un angle de correction prédéfini, l'angle de correction étant déterminé de manière flexible en fonction de l'excitation de vibrations et/ou du régime du moteur à combustion interne.

5. Procédé selon l'une des revendications précédentes, **caractérisé en ce que**
l'angle d'allumage après la saisie d'une excitation de vibrations est modifié uniquement pour une durée d'action prédéfinie, la durée d'action étant déterminée de manière flexible en fonction de l'excitation de vibrations et/ou du régime du moteur à combustion interne.

6. Procédé selon la revendication 5, **caractérisé en ce que**
la remise à la valeur initiale de l'angle d'allumage après écoulement de la durée d'action s'effectue de manière flexible en fonction de l'excitation de vibrations et/ou du régime du moteur à combustion interne.

7. Procédé selon la revendication 5 ou 6,
**caractérisé en ce que**
l'angle d'allumage après écoulement de la durée d'action est ramené à sa valeur initiale en plusieurs périodes, et ce de manière linéaire dans le temps.

8. Procédé selon la revendication 1, **caractérisé en ce que**
la remise à la valeur initiale de l'angle d'allumage après écoulement de la durée d'action s'effectue dans une première période avec un premier gradient, puis dans une deuxième période avec un deuxième gradient, le gradient utilisé dans la deuxième période étant supérieur à celui utilisé dans la première période.

9. Procédé selon l'une des revendications précédentes, **caractérisé en ce que**
l'angle d'allumage n'est modifié que si le moteur à combustion interne fonctionne en charge partielle.

10. Procédé selon l'une des revendications 1 à 9, **caractérisé en ce que**
l'angle d'allumage n'est modifié que si le moteur à combustion interne se trouve en fonctionnement poussé.
